# EUROPEAN PATENT APPLICATION

(11) **EP 4 769 852 A1**
(43) Date of publication of application: **01.07.2026**
(21) Application number: 25210673.7
(22) Date of filing: 23.10.2025
(51) Int. Cl.: H02B 1/015, H02B 1/04

(54) **GRID-CONNECTED DISTRIBUTION BOX AND CIRCUIT BREAKER ASSEMBLY**

(30) Priority: 24.12.2024 KR 20240195243
(71) Applicant: Hanwha Solutions Corporation, Jung-gu Seoul 04541 (KR)
(72) Inventor: HAM, Joung Hee, 04541 Seoul (KR); SEO, Seong Won, 04541 Seoul (KR); KIM, Kyoung Hwan, 04541 Seoul (KR)
(74) Representative: Mooser, Sebastian Thomas

(57) **Abstract**

Provided is a grid-connected distribution box (1) including a case (10) having an internal space, a grid module (100) disposed in the internal space and having a main input terminal (110) to which main power is input, a control module (300) disposed adjacent to the grid module (100) and having a control board (310) connected to the grid module (100) and a sub-input terminal (330) connected to at least one sub-power supply, and a circuit breaker module (500) disposed in the internal space and having a plurality of circuit breakers (510) connected to the control board (310) and one or more brackets (5002, 5003) which fix the plurality of circuit breakers (510).

## Description

### BACKGROUND

### 1. Field

The present disclosure relates to a grid-connected distribution box having a circuit breaker fixing structure, and a circuit breaker assembly.

### 2. Description of the Related Art

As a distribution box is recognized as an electrical device for branching and distributing power to a plurality of power consumers, the distribution box traditionally includes a metal enclosure, a main circuit breaker connected to a power grid, a plurality of branch circuit breakers, and a busbar connecting these components.

Recent distribution boxes have evolved beyond simple power distribution functions and are implementing various intelligent functions according to the purpose thereof. For example, there are grid-connected distribution boxes that are connected to a plurality of power grids to mutually exchange power.

However, constituent parts of distribution boxes of a related art have been assembled in the order of a production process and disposed to be coplanar with each other, and thus when a plurality of circuit breakers are installed inside an enclosure, a non-utilizable space has been generated inside the enclosure, which reduces space utilization. In some embodiments, due to a deep placement of a working position, there has been a disadvantage in that there is a possibility of misassembly and post-processing processes are complicated.

### SUMMARY

The present disclosure is directed to providing a grid-connected distribution box in which space utilization is improved, and ease of work is improved, and a circuit breaker assembly.

An aspect of the present disclosure provides a grid-connected distribution box including a case having an internal space, a grid module disposed in the internal space and having a main input terminal to which main power is input, a control module disposed adjacent to the grid module and having a control board connected to the grid module and a sub-input terminal connected to at least one sub-power supply, and a circuit breaker module disposed in the internal space and having a plurality of circuit breakers connected to the control board and one or more brackets which fix the plurality of circuit breakers.

In some embodiments, the circuit breaker module may include a base frame which has a flat plate shape and on which the plurality of circuit breakers are disposed, a first bracket connected to the base frame and having a first supporter and a second supporter facing each other, and a second bracket which connects the first supporter to the second supporter.

In some embodiments, the circuit breaker module may further include a circuit breaker mount which is disposed on the base frame and on which the plurality of circuit breakers are mounted.

In some embodiments, the circuit breaker module may further include a fastening rail which extends in a longitudinal direction of the base frame and to which a hook of each of the plurality of circuit breakers is assembled.

In some embodiments, the circuit breaker module may further include a fixing pin onto which a connection portion of each of the plurality of circuit breakers is inserted.

In some embodiments, the plurality of circuit breakers may have switches and stepped parts having a step difference from the switches, and the second bracket may be inserted between the stepped parts of the plurality of circuit breakers.

In some embodiments, the plurality of circuit breakers may each have a connection portion disposed below the stepped part and inserted onto a fixing pin.

In some embodiments, in the circuit breaker module, the plurality of the circuit breakers may be disposed in a first direction which is a longitudinal direction, and at least one of the plurality of circuit breakers may be disposed in a second direction which is a width direction.

In some embodiments, the circuit breaker module may include a first bracket having a first supporter and a second supporter which are disposed at opposite sides in the first direction and support the plurality of circuit breakers, and a second bracket which connects the first supporter to the second supporter and supports a pair of circuit breakers adjacent in the second direction.

In some embodiments, the circuit breaker module may be disposed on the grid module and the control module.

Another aspect of the present disclosure provides a circuit breaker assembly including a base frame, a plurality of circuit breakers disposed on the base frame, a first bracket connected to the base frame and having a first supporter and a second supporter facing each other, and a second bracket which connects the first supporter to the second supporter.

In some embodiments, the circuit breaker assembly may further include a circuit breaker mount which is disposed on the base frame and on which the plurality of circuit breakers are mounted.

In some embodiments, the circuit breaker mount may include a fastening rail to which a hook of each of the plurality of circuit breakers is assembled, and a fixing pin onto which a connection portion of each of the plurality of circuit breakers is inserted.

In some embodiments, the plurality of circuit breakers may have switches and stepped parts having a step difference from the switches, and the second bracket may be inserted between the stepped parts of the plurality of circuit breakers.

In some embodiments, the plurality of circuit breakers may each have a connection portion disposed below the stepped part and inserted onto a fixing pin.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a schematic block diagram illustrating a grid-connected distribution box having a circuit breaker fixing structure according to an embodiment of the present disclosure;
FIG. 2 is a perspective view illustrating an embodiment of the grid-connected distribution box;
FIG. 3 is an exploded perspective view of a part of the grid-connected distribution box of FIG. 2;
FIG. 4 is a view illustrating a grid module and a relay module of FIG. 3;
FIG. 5 is a cross-sectional view taken along line V-V' of FIG. 3 when the grid module and the relay module are assembled;
FIG. 6 is a view illustrating a control module of FIG. 3;
FIG. 7 is a view illustrating a neutral module of FIG. 3;
FIG. 8 is a view illustrating a cross section of adjacent portions of the control module and the neutral module;
FIG. 9 is an exploded perspective view of a circuit breaker module of FIG. 3;
FIG. 10 is a view illustrating a state in which the circuit breaker module is assembled in the grid-connected distribution box of FIG. 3; and
FIG. 11 is a schematic diagram illustrating a circuit of the grid-connected distribution box of FIG. 2.

### DETAILED DESCRIPTION

Since the present disclosure may apply various transformations and have various embodiments, specific embodiments will be illustrated in the drawings and described in detail in the detailed description. Effects and features of the present disclosure, and methods for achieving them will become clear with reference to the embodiments described below in detail together with the drawings. However, the present disclosure is not limited to the embodiments disclosed below and may be implemented in various forms.

Hereinafter, embodiments of the present disclosure will be described in detail with reference to the attached drawings. When describing with reference to the drawings, identical or corresponding components are given the same drawing reference numerals and redundant descriptions thereof are omitted.

In the following embodiments, the terms first, second, and the like do not have limited meaning but are used for the purpose of distinguishing one component from another component.

In the following embodiments, the expressions used in the singular such as "a," "an," and "the" are intended to include the plural forms as well, unless the context clearly indicates otherwise.

In the following embodiments, it will be understood that the terms such as "including," "comprising," and "having" specify the presence of stated features or components, but do not preclude the presence or addition of one or more other features or components.

In the following embodiments, when an area, a component, or the like is positioned on or above another part, the present disclosure includes not only a case in which the area, the component, or the like is positioned directly above the other part, but also a case in which other areas, other components, or the like may be positioned therebetween.

In the drawings, components may be exaggerated or reduced in size for convenience of description. For example, the size and thickness of each component shown in the drawing are arbitrarily shown for convenience of description, and thus the present disclosure is not necessarily limited to what is shown.

In the following embodiments, it will be understood that when an area, a component, or the like is referred to as being connected to another component, it may be directly connected to the other component or intervening components may also be present.

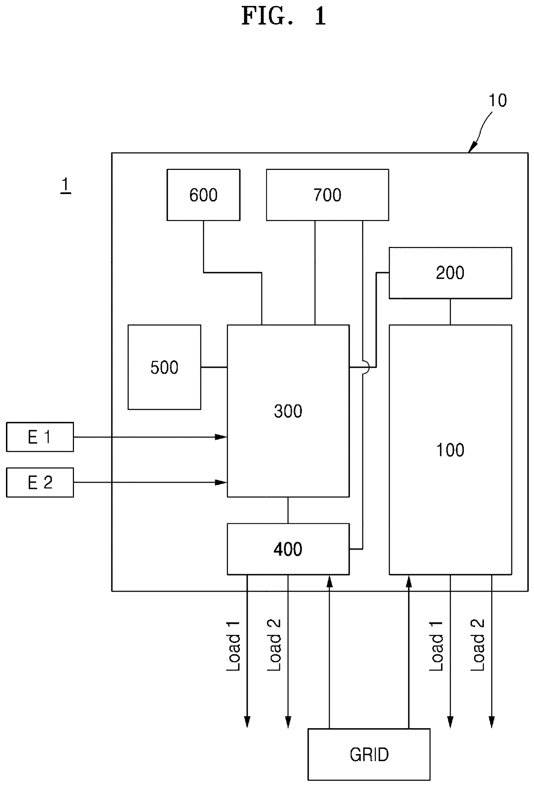

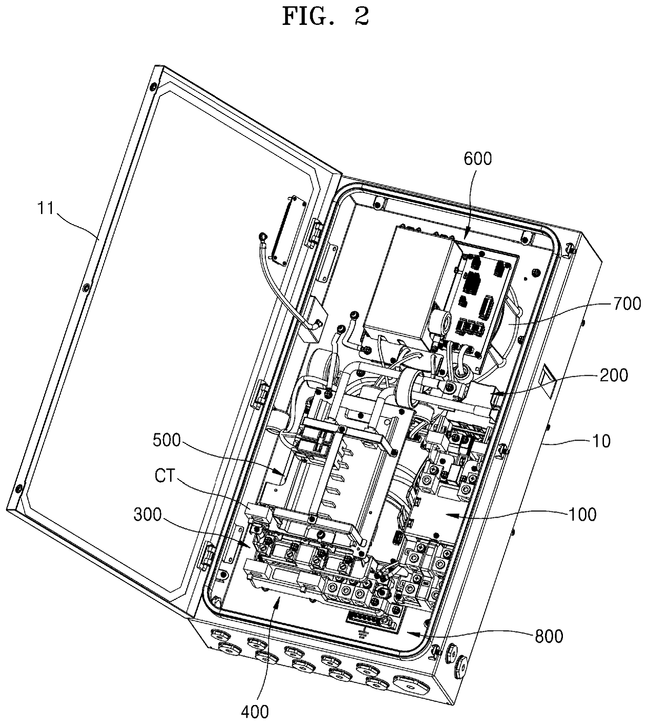

FIG. 1 is a schematic block diagram illustrating a grid-connected distribution box 1 having a circuit breaker fixing structure according to an embodiment of the present disclosure. FIG. 2 is a perspective view illustrating an embodiment of the grid-connected distribution box 1.

Referring to FIG. 1, the grid-connected distribution box 1 may be electrically connected to a main power supply GRID, one or more sub-power supplies E1 and E2, and a plurality of loads Load 1 and Load 2, and may control power flow. The grid-connected distribution box 1 may distribute power input from the main power supply GRID or the sub-power supplies E1 and E2 and supply the input power to the loads Load 1 and Load 2.

According to an embodiment, the main power supply GRID may be a power grid that includes an infrastructure system for generating, transmitting, and distributing power. For example, the main power supply GRID may include a power plant, a substation, a power line network, and the like.

The sub-power supplies E1 and E2 may be provided as power supplies or systems that are different types from the main power supply GRID.

As an example, the sub-power supplies E1 and E2 may be provided as photovoltaic power generation systems. The sub-power supplies E1 and E2 may be the photovoltaic power generation system each including a photovoltaic module and devices connected thereto. The photovoltaic module is a power generation device installed on a roof or exterior wall of a building and converts solar light into electrical energy through a photovoltaic effect. The device may be a power conditioning system (PCS) or power conversion system (PCS) that performs power conversion on power generated by the photovoltaic module. In some embodiments, the device may be a module-level power electronics (MLPE). The device may be an optimizer or a micro-inverter (MI).

Optionally, the sub-power supplies E1 and E2 may each further include a coupler connected to the device. At least some of the devices may be connected to the grid-connected distribution box 1 through the coupler. For example, the coupler may combine powers output from a plurality of devices into one output power. The powers combined by the coupler may be supplied to the grid-connected distribution box 1.

As another example, the sub-power supplies E1 and E2 may be provided as energy storage systems (ESSs). The sub-power supplies E1 and E2 may store power generated by the photovoltaic module or power supplied from a power grid and may supply power to the grid-connected distribution box 1 according to the needs of the loads Load 1 and Load 2, thereby efficiently supplying power. The sub-power supplies E1 and E2 may each include a battery for storing power and a power conversion module. The power conversion module may be a PCS that performs conversion between battery-side power and opposite-side power. In this case, the PCS may include a bidirectional direct current (DC)-to-DC converter that is connected to the battery to convert a voltage, and a bidirectional inverter that connects the bidirectional DC-to-DC converter to a device outside the ESS.

The loads Load 1 and Load 2 each refer to a device that is installed in an electric power consumer such as a house, a commercial facility, or a factory and operated by receiving electric energy distributed through the grid-connected distribution box 1. That is, the loads Load 1 and Load 2 may include various types of devices, equipment, facilities, and the like that operate by receiving electric energy supplied from the main power supply GRID or the sub-power supplies E1 and E2.

The grid-connected distribution box 1 according to an embodiment of the present disclosure may be connected to a power grid that is the main power supply GRID, may be connected to a photovoltaic power generation system that is a first sub-power supply E1, and may be connected to an ESS that is a second sub-power supply E2. The grid-connected distribution box 1 may control a voltage, a current, and/or power output from or supplied to each component according to a power supply state of the main power supply GRID and/or the sub-power supplies E1 and E2.

Referring to FIGS. 1 and 2, in the grid-connected distribution box 1, a case 10 having an internal space may be provided to be opened or closed by a cover 11, and parts may be disposed in the internal space of the case 10.

The grid-connected distribution box 1 may include a grid module 100, a relay module 200, a control module 300, a neutral module 400, a circuit breaker module 500, a communication module 600, and a transformer 700 inside the case 10.

The grid module 100 may be disposed inside the case 10, may be connected to the main power supply GRID, and may supply power to at least one load. The grid module 100 may receive power from the main power supply GRID and may distribute the power to at least one load. For example, the grid module 100 may supply power to a first load Load 1 and/or a second load Load 2.

The relay module 200 may be disposed at one side of the grid module 100 and may be assembled with the grid module 100. The relay module 200 may be electrically connected to the control module 300. The relay module 200 may control power supply to the grid module 100 by the control module 300. The relay module 200 may connect or disconnect a power circuit according to a control signal of the control module 300.

The control module 300 may be connected to at least one sub-power supply. For example, the control module 300 may be connected to at least one of the first sub-power supply E1 and the second sub-power supply E2 to receive power.

The sub-power supply may be provided as an emergency power supply for a generator device, a power generation system inverter, or an ESS. However, one or more embodiments are not limited thereto, and any power supply may be applied as the sub-power supply as long as the power supply may supply stable alternating current (AC) power to the control module 300.

The control module 300 may be connected to the relay module 200 and may perform control such that power supplied from the sub-power supply is transmitted to the grid module 100 through the relay module 200. By the control module 300, the grid module 100 may transmit power supplied from the sub-power supply to a load.

The neutral module 400 may be electrically connected to the control module 300 and may be positioned adjacent to the grid module 100. The neutral module 400 may be connected to a neutral line of the main power supply GRID and a neutral line of the load, thereby fixing the neutral lines.

In an embodiment, the grid module 100 may be connected to an active line of the main power supply GRID so that power may be input. The grid module 100 may be connected to an active line of the load Load 1 or Load 2 so that power may be output. In this case, the neutral module 400 may be connected to a common neutral line of the main power supply GRID so that power may be input. The neutral module 400 may be connected to the loads Load 1 and Load 2 so that power may be output. The grid-connected distribution box 1 may receive and distribute power at a constant voltage by a phase voltage generated between the active line and the neutral line.

The circuit breaker module 500 may include a typical circuit breaker to block a power transfer in the grid-connected distribution box 1. The circuit breaker module 500 may be electrically connected to the control module 300, and when an abnormality occurs in power supply, the power supply may be stopped by the circuit breaker module 500.

According to an embodiment, the circuit breaker module 500 may be disposed on the control module 300 to overlap the control module 300. As shown in FIG. 2, the circuit breaker module 500 may be disposed and layered on the control module 300 so that the grid-connected distribution box 1 may have a simple internal structure and a compact size.

The circuit breaker module 500 may be disposed in the internal space of the case 10 and may have a circuit breaker 510 connected to a control board 310 and at least one bracket for fixing the circuit breaker 510. The circuit breaker module 500 will be described in detail below.

The communication module 600 may be electrically connected to the control module 300 and may perform communication processing according to a control signal. The communication module 600 may include a switched-mode power supply (SMPS) board for converting an AC current into a DC current and an interface board for processing a signal between circuits.

The transformer 700 may be disposed in the internal space of the case 10. As an example, the transformer 700 may be provided as a typical autotransformer. The transformer 700 may be connected to the control module 300 and may supply split-phase power to the first load Load 1 and the second load Load 2 from the grid module 100 according to a control signal.

In this case, a heat dissipation structure (not shown) may be formed on a surface of the case 10 facing the transformer 700. The heat dissipation structure may be provided in a shape integrated with the case 10. The heat dissipation structure may be provided to externally dissipate heat generated when the transformer 700 and other internal parts operate. According to an embodiment, the communication module 600 may be disposed on the transformer 700 to overlap the transformer 700. As shown in FIG. 2, the communication module 600 may be disposed and layered on the transformer 700 so that the grid-connected distribution box 1 may have a simple internal structure and a compact size.

Optionally, the grid-connected distribution box 1 may further include a grounding module 800. The grounding module 800 may connect an electric circuit to the ground through a conducting wire and may allow a current to flow to the ground. The grounding module 800 may allow a current to flow to the ground when an abnormal voltage occurs, thereby allowing a device to maintain the same potential.

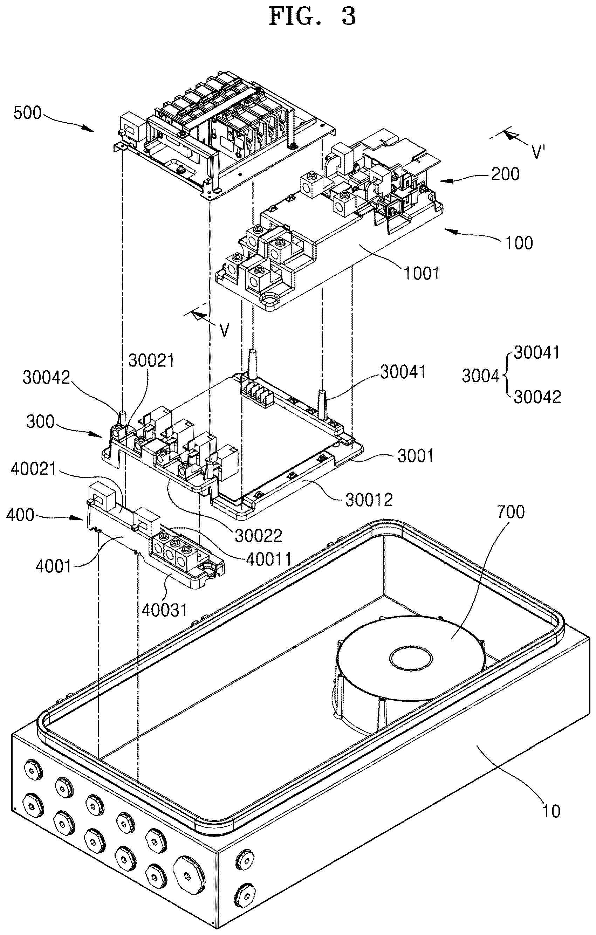

FIG. 3 is an exploded perspective view of a part of the grid-connected distribution box 1 of FIG. 2.

Referring to FIG. 3, the grid module 100, the relay module 200, the control module 300, the neutral module 400, and the circuit breaker module 500 may be disposed adjacent to each other.

For convenience of description, hereinafter, in the grid-connected distribution box 1, a side at which the neutral module 400 is disposed is defined as a front side, and a side at which the transformer 700 is placed is defined as a rear side.

The grid module 100 may have a first base body 1001, and the grid module 100 and the relay module 200 may be assembled so that the relay module 200 may be seated at one side of the first base body 1001.

The first base body 1001 may have a step difference. In some embodiments, the first base body 1001 may be formed in a shape extending in a longitudinal direction of the case 10 and may be disposed at a left side of the internal space of the case 10.

The control module 300 may have an approximately plate shape and may be disposed at a right side of the internal space of the case 10. The control module 300 may be disposed in parallel with the grid module 100 in a left-right direction.

The control module 300 may have a first base structure 3001 so that a first step 30021 on which at least one sub-input terminal is mounted may be formed at a front side thereof, and a grid module support 30012 adjacent to the grid module 100 may be formed at a side thereof.

The first step 30021 may be formed to protrude upward from a base surface of the first base structure 3001. A cut-out portion 30022 may be disposed below the first step 30021. The cut-out portion 30022 may form a space recessed from a front surface of the first base structure 3001. A second base structure 4001 of the neutral module 400 may be partially inserted into the cut-out portion 30022.

The first step 30021 may protrude from a bottom surface inside the case 10, and thus a sub-input terminal mounted on the first step 30021 may be positioned at an upper portion of the case 10. In some embodiments, when work of connecting a conducting wire to the sub-input terminal, a working position may be provided at an upper side of the case 10, and thus work convenience may be improved.

The grid module support 30012 may be provided in a block shape protruding upward from the base surface of the first base structure 3001. The grid module support 30012 may be inserted into a side surface of the first base body 1001.

According to an embodiment, facing surfaces of the first base body 1001 and the first base structure 3001 may correspond to each other. The grid module support 30012 may be inserted into a right side surface of the first base body 1001. Thus, the grid module 100 and the control module 300 may at least partially overlap each other to be installed more compactly.

In some embodiments, the control module 300 may have a first column 30041 and a second column 30042 which extend from the first base structure 3001 in a height direction. The circuit breaker module 500 may be disposed on the first column 30041 and the second column 30042.

The circuit breaker module 500 may have a plurality of screw holes at a peripheral portion thereof and may be installed on the first column 30041 and the second column 30042 of the control module 300. As shown in the drawing, the circuit breaker module 500 may be disposed on the control module 300 so that when the grid-connected distribution box 1 is opened, a switch surface of the circuit breaker module 500 may be disposed to face outward. Accordingly, a working position for the circuit breaker module 500 may be provided at the upper side of the case 10, and thus work convenience may be improved.

The neutral module 400 may be formed in a shape extending in a width direction of the case 10 and may be disposed at a front side of the internal space of the case 10. The neutral module 400 may be disposed adjacent to the control module 300 in a front-rear direction.

The neutral module 400 may have the second base structure 4001 so that a second step 40021 may be provided at one side of a second plate 40011, and a neutral terminal mount 40031 may be provided at the other side of the second plate 40011.

The second step 40021 may be disposed at one side of a front surface of the second base structure 4001. The second step 40021 may be formed to protrude upward from the second plate 40011 of the second base structure 4001.

The neutral terminal mount 40031 may be disposed at the other side of the second base structure 4001. The neutral terminal mount 40031 may be provided on the second plate 40011 of the second base structure 4001.

In the second base structure 4001, the second plate 40011 may be inserted into the cut-out portion 30022 of the first base structure 3001.

According to an embodiment, facing surfaces of the first base structure 3001 and the second base structure 4001 may correspond to each other. The second plate 40011 of the second base structure 4001 may be inserted into the cut-out portion 30022 of the first base body 1001. Thus, the control module 300 and the neutral module 400 may at least partially overlap each other to be installed more compactly.

According to an embodiment, the second plate 40011 of the neutral module 400 may be disposed to overlap the first step 30021 of the control module 300. The grid module support 30012 of the control module 300 may be inserted into a side surface of the grid module 100. The relay module 200 may be assembled onto the grid module 100, and the circuit breaker module 500 may be installed on the first column 30041 and the second column 30042 of the control module 300.

Accordingly, in the grid-connected distribution box 1 according to an embodiment, internal modules may be installed more compactly because the grid module 100, the relay module 200, the control module 300, the neutral module 400, and the circuit breaker module 500 partially overlap each other.

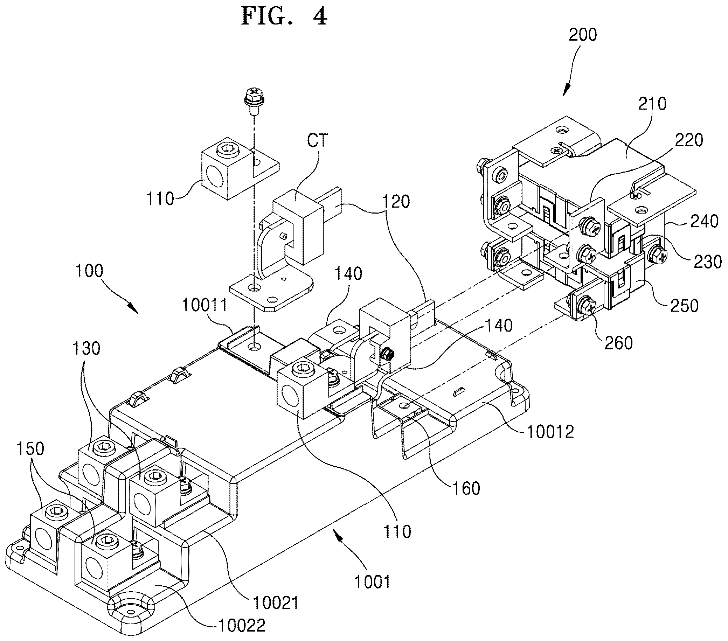

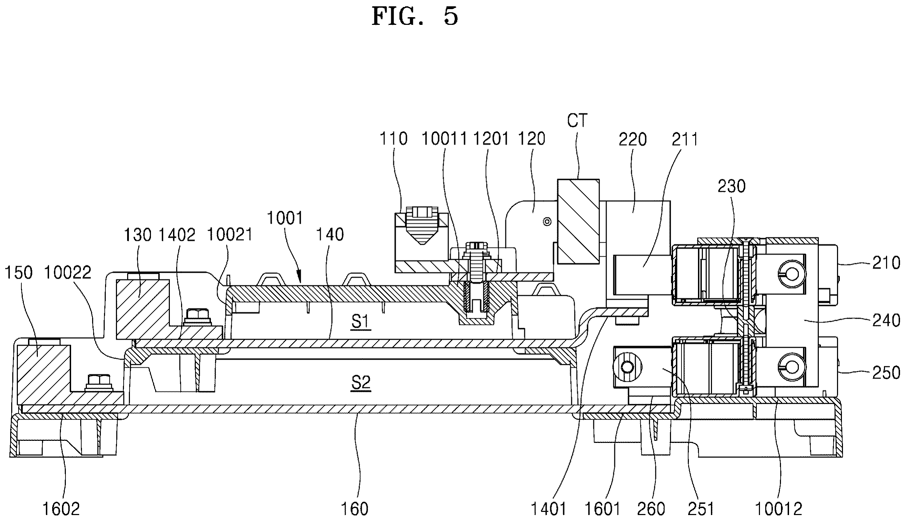

FIG. 4 is a view illustrating the grid module 100 and the relay module 200 of FIG. 3. FIG. 5 is a cross-sectional view taken along line V-V' of FIG. 3 when the grid module 100 and the relay module 200 are assembled.

Referring to FIGS. 1 to 5, the grid module 100 and the relay module 200 may be assembled to each other to form an electric circuit.

The grid module 100 may include the first base body 1001 having a step difference, and a main input terminal 110 and one or more output terminals 130 and 150 which are disposed at different levels along the step difference.

The grid module 100 may include the main input terminal 110, a main input tab 120, a first output terminal 130, a first connector 140, a second output terminal 150, and a second connector 160.

According to an embodiment, the first base body 1001 may include a main terminal mount 10011 forming an upper surface thereof, a first output terminal mount 10021 disposed below the main terminal mount 10011, and a second output terminal mount 10022 disposed below the first output terminal mount 10021.

The main input terminal 110 may be mounted on the main terminal mount 10011, the first output terminal 130 may be mounted on the first output terminal mount 10021, and the second output terminal 150 may be mounted on the second output terminal mount 10022. That is, due to a structure of the first base body 1001, the main input terminal 110, the first output terminal 130, and the second output terminal 150 may be disposed at different levels.

In another embodiment, the main input terminal 110 may be disposed on any one output terminal mount of the first output terminal mount 10021 and the second output terminal mount 10022, and the first output terminal 130 and the second output terminal 150 may be disposed on the remaining output terminal mount and the main terminal mount 10011.

The first base body 1001 may include an insulating material. Thus, the main input terminal 110, the first output terminal 130, and the second output terminal 150 installed on the first base body 1001 may form an electric circuit and prevent leakage current.

The first base body 1001 may include a heat-resistant and chemical-resistant material. Thus, the physical or chemical deformation of the first base body 1001 due to heat generated from the main input terminal 110, the first output terminal 130, and the second output terminal 150 installed on the first base body 1001 may be prevented.

The grid module 100 may form an electric circuit connected to the relay module 200 through the main input terminal 110, the main input tab 120, the first output terminal 130, the first connector 140, the second output terminal 150, and the second connector 160 installed on the first base body 1001.

The main input terminal 110 may be directly connected to the main power supply GRID so that power may be applied. The main input terminal 110 may be connected to the active line of the main power supply GRID. The main input terminal 110 may be connected to the relay module 200 through the main input tab 120.

The main input tab 120 may be disposed on the main terminal mount 10011. The main input terminal 110 may be mounted on the main input tab 120. The main input tab 120 may have one end portion connected to the main input terminal 110 and the other end portion connected to a first relay tab 220 of the relay module 200. Power input to the main input terminal 110 may be transmitted to the relay module 200 through the main input tab 120.

As a specific example, the main input terminal 110 may have a tab fixing member 1201 having a plate shape so that the tab fixing member 1201 may be disposed on the main terminal mount 10011. The main input terminal 110 may be seated on the tab fixing member 1201. In this case, the other end portion of the main input tab 120 may be formed in a shape extending from the tab fixing member 1201 toward the first relay tab 220.

The main input tab 120 may further include a current sensor CT. A current input to the main input terminal 110 may be measured at the main input tab 120 by the current sensor CT.

The first output terminal 130 may be connected to the first load Load 1 to supply power. The first output terminal 130 may be connected to the active line of the first load Load 1. The first output terminal 130 may be connected to the relay module 200 through the first connector 140.

The first connector 140 may be disposed on the first output terminal mount 10021. A first opening S1 may be formed to pass through the first output terminal mount 10021 in a longitudinal direction so that the first connector 140 may be inserted into the first opening S1. The first connector 140 may be formed in a shape extending through the first opening S1.

The first connector 140 may have one end portion connected to the first relay tab 220 of the relay module 200 and the other end portion connected to the first output terminal 130. The first connector 140 may form a circuit that connects the main input terminal 110 to the first output terminal 130 through the first relay tab 220. Accordingly, power supplied from the main power supply GRID may be distributed to the first load Load 1.

In some embodiments, the other end portion of the first connector 140 may be bent upward. The first connector 140 may have a bent end portion 1401 bent upward and a straight line end portion 1402 extending in a straight line at a side opposite to the bent end portion 1401. Due to a shape of the bent end portion 1401, the first connector 140 may be fastened to the first relay tab 220 above a bottom surface of the first output terminal mount 10021, and a large separation distance from the second connector 160 may be formed.

The second output terminal 150 may be connected to the second load Load 2 to supply power. The second output terminal 150 may be connected to the active line of the second load Load 2. The second output terminal 150 may be connected to the relay module 200 through the second connector 160.

The second connector 160 may be disposed on the second output terminal mount 10022. A second opening S2 may be formed to pass through the second output terminal mount 10022 in a longitudinal direction so that the second connector 160 may be inserted into the second opening S2. The second connector 160 may be formed in a shape extending through the second opening S2.

The second connector 160 may have one end portion connected to a second relay tab 260 of the relay module 200 and the other end portion connected to the second output terminal 150. The second connector 160 may form a circuit connecting the relay module 200 and the second output terminal 150, thereby allowing power transmitted through the relay module 200 to be distributed to the second load Load 2.

In some embodiments, the second connector 160 may be provided as a linear terminal extending in both directions and thus may have a relay-side end portion 1601 and a load terminal-side end portion 1602. The second connector 160 may be mounted on a bottom surface of the second output terminal mount 10022 and may be installed stably.

According to an embodiment, the second connector 160 may have a different length from the first connector 140. A length of the second connector 160 may be greater than a length of the first connector 140. In this case, in the first base body 1001, a length of the second output terminal mount 10022 may be greater than a length of the first output terminal mount 10021.

Accordingly, inside the case 10, the first output terminal 130 may be disposed behind the second output terminal 150, and at a side opposite to the first output terminal 130, the relay-side end portion 1601 of the second connector 160 may be positioned behind the bent end portion 1401 of the first connector 140.

Due to a shape of the first base body 1001 and a length difference between the first connector 140 and the second connector 160, during an assembly process of the grid module 100, an operation of assembling the second output terminal 150 to the second connector 160 and an operation of assembling the first output terminal 130 to the first connector 140 may each be easily performed.

In some embodiments, during an assembly process of the grid module 100 and the relay module 200, an operation of connecting the second relay tab 260 to the relay-side end portion 1601 of the second connector 160 and an operation of connecting the first relay tab 220 to the bent end portion 1401 of the first connector 140 may each be easily performed.

The first base body 1001 of the grid module 100 may further include a relay mount 10012 protruding from a surface of the second output terminal mount 10022. The relay mount 10012 may support the relay module 200.

When the relay module 200 is assembled with the grid module 100, the relay module 200 may be seated on the relay mount 10012 so that an assembly portion with the grid module 100 may be stably supported.

When one side of the relay module 200 is assembled with the grid module 100, the other side of the relay module 200 may be connected to the control module 300. The relay module 200 may receive power from the first sub-power supply E1 or the second sub-power supply E2 connected to the control module 300.

The relay module 200 may output power input to the main input terminal 110 to the first output terminal 130 and may output power input by the control module 300 to the second output terminal 150. That is, the relay module 200 may separate a circuit that supplies power from a main power supply to a load from a circuit that supplies power from a sub-power supply to a load.

The relay module 200 may include a first relay 210, the first relay tab 220, a spacer 230, a connection tab 240, a second relay 250, and the second relay tab 260.

The relay module 200 may include the first relay 210 and the second relay 250 that are vertically stacked. In the relay module 200, the first relay 210 may be connected to the first relay tab 220 to form an electric circuit, and the second relay 250 may be connected to the second relay tab 260 to form an electric circuit.

According to an embodiment, the first relay 210 may assemble the first relay tab 220 to a first relay tab supporter 211. The first relay tab 220 may connect the main input tab 120 and the first connector 140 of the grid module 100 to each other to form a power supply circuit of the main power supply GRID.

In this case, the second relay 250 may assemble the second relay tab 260 to a second relay tab supporter 251. The second relay tab 260 may be connected to the second connector 160 of the grid module 100 to form a power supply circuit for power of the first sub-power supply E1 or the second sub-power supply E2 transmitted from the control module 300 to the relay module 200.

The connection tab 240 may have a shape vertically extending to connect the first relay 210 to the second relay 250. In this case, the spacer 230 may be disposed between the first relay 210 and the second relay 250 to support the first relay 210 and the second relay 250 and maintain a separation space.

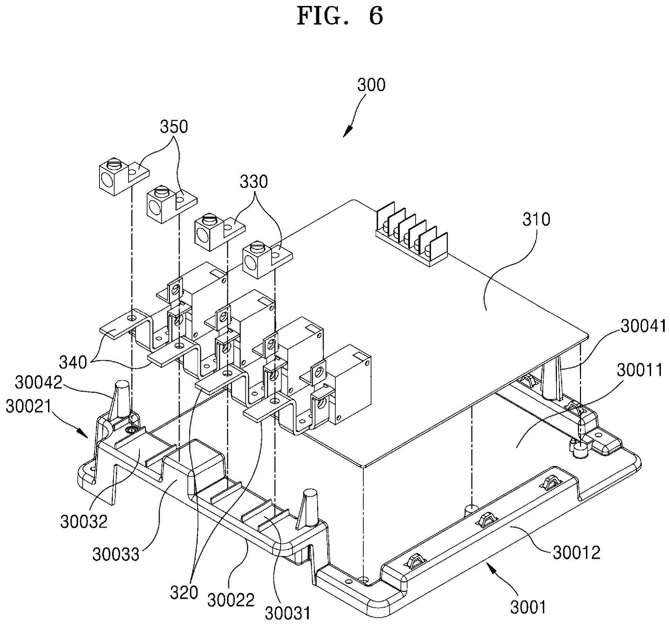

FIG. 6 is a view illustrating the control module 300 of FIG. 3.

Referring to FIGS. 1 and 6, the control module 300 may include the first base structure 3001, and a control board 310, a first sub-input tab 320, a first sub-input terminal 330, a second sub-input tab 340, and a second sub-input terminal 350 which are disposed on the first base structure 3001.

The first base structure 3001 may include an insulating material. Thus, the control board 310, the first sub-input terminal 330, and the second sub-input terminal 350 installed on the first base structure 3001 may form an electric circuit and prevent leakage current.

The first base structure 3001 may include a heat-resistant and chemical-resistant material. Thus, the physical or chemical deformation of the first base structure 3001 due to heat generated from the control board 310, the first sub-input terminal 330, and the second sub-input terminal 350 installed on the first base structure 3001 may be prevented.

According to an embodiment, the first base structure 3001 may include a first plate 30011, the grid module support 30012, the first step 30021, the first column 30041, and the second column 30042.

The first base structure 3001 may have a step difference so that the control board 310 and the first and second sub-input terminals 330 and 350 may be positioned at different levels and disposed not to overlap each other.

The cut-out portion 30022 of the first step 30021 and the grid module support 30012 have been described with reference to FIG. 3, and thus descriptions thereof will be omitted below.

The first plate 30011 may have a flat plate shape, and the control board 310 may be disposed on the first plate 30011.

The control board 310 may be provided as a circuit board that generates an electrical signal for controlling the grid-connected distribution box 1. The control board 310 may generate control signals for the grid module 100, the relay module 200, the control module 300, the neutral module 400, the circuit breaker module 500, the communication module 600, and the transformer 700.

For example, the control board 310 may measure input sub-power at the first sub-input terminal 330 and the second sub-input terminal 350. In some embodiments, the control board 310 may control the relay module 200 to switch a power supply circuit, thereby controlling power transmitted to a load. In some embodiments, the grid module 100 may control the circuit breaker module 500 to block a current when an abnormality occurs in the current input to or output from the grid module 100 and the neutral module 400. In some embodiments, the control board 310 may control the transformer 700 to transform a current input to or output from the grid-connected distribution box 1.

The first step 30021 may protrude from one side of the first plate 30011 in a height direction and may support the first sub-input terminal 330 and the second sub-input terminal 350. In some embodiments, the first step 30021 may have a first sub-terminal mount 30031 and a second sub-terminal mount 30032.

The first sub-input terminal 330 may be disposed on the first sub-terminal mount 30031, and the second sub-input terminal 350 may be disposed on the second sub-terminal mount 30032.

A protruding block 30033 may be disposed between the first sub-terminal mount 30031 and the second sub-terminal mount 30032. The protruding block 30033 may be formed to protrude from a surface of the first step 30021.

The protruding block 30033 may define the first sub-terminal mount 30031 and the second sub-terminal mount 30032. The first sub-input terminal 330 and the second sub-input terminal 350 may be supported on the first step 30021 by the protruding block 30033 and fixed in place. In some embodiments, the first sub-input terminal 330 and the second sub-input terminal 350 may be separated by the protruding block 30033 so that interference between circuits may be prevented.

The first column 30041 may be formed to protrude from the first plate 30011 in a height direction, and the second column 30042 may be formed to extend from the first step 30021. Uppermost ends of the first column 30041 and the second column 30042 may be formed to have the same height.

According to an embodiment, power may be input to the control module 300 through the first sub-input tab 320, the first sub-input terminal 330, the second sub-input tab 340, and the second sub-input terminal 350.

The first sub-input terminal 330 may be connected to the first sub-power supply E1 so that power may be applied. The first sub-input terminal 330 may be connected to an active line of the first sub-power supply E1. The first sub-input terminal 330 may be installed on the first sub-input tab 320.

The first sub-input tab 320 may be disposed on the first sub-terminal mount 30031. The first sub-input tab 320 may have one end portion connected to the first sub-input terminal 330 and the other end portion connected to the control board 310. In some embodiments, the first sub-input tab 320 may be connected to the relay module 200 through a conducting wire and may form a circuit for power transmitted to the relay module 200 under the control of the control board 310.

The second sub-input terminal 350 may be connected to the second sub-power supply E2 so that power may be applied. The second sub-input terminal 350 may be connected to an active line of the second sub-power supply E2. The second sub-input terminal 350 may be installed on the second sub-input tab 340.

The second sub-input tab 340 may be disposed on the second sub-terminal mount 30032. The second sub-input tab 340 may have one end portion connected to the second sub-input terminal 350 and the other end portion connected to the control board 310. In some embodiments, the second sub-input tab 340 may be connected to the relay module 200 through a conducting wire and may form a circuit for power transmitted to the relay module 200 under the control of the control board 310.

According to an embodiment, the first sub-input tab 320 and the second sub-input tab 340 may be bent upward. The first sub-input tab 320 and the second sub-input tab 340 may be bent to correspond to a step difference between the first plate 30011 and the first step 30021. That is, the first sub-input tab 320 and the second sub-input tab 340 may be bent along a shape of the first step 30021 so that one end portions thereof may be disposed on the first step 30021, and the other end portions thereof may be disposed on the control board 310.

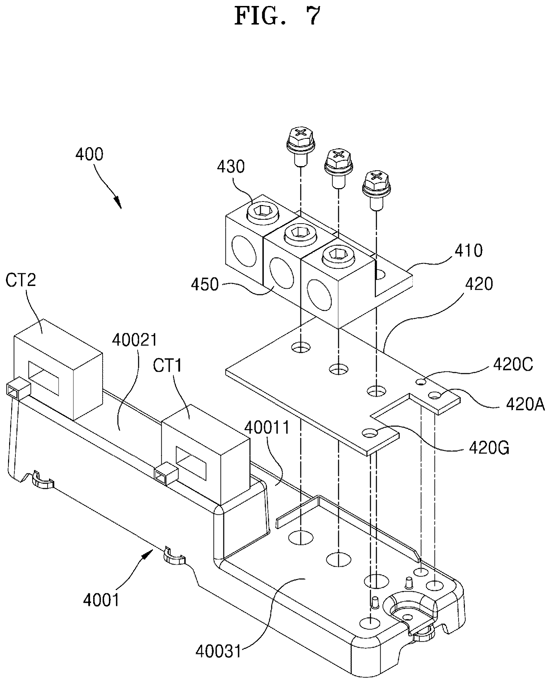

FIG. 7 is a view illustrating the neutral module 400 of FIG. 3.

Referring to FIGS. 1 and 7, the neutral module 400 may include the second base structure 4001, and a neutral input terminal 410, a neutral connection tab 420, a first neutral output terminal 430, and a second neutral output terminal 450 which are disposed on the second base structure 4001.

The neutral module 400 may be disposed adjacent to the control module 300 and may include the neutral input terminal 410 connected to the main power supply GRID and one or more neutral output terminal 430 and 450 connected to one or more loads.

The second base structure 4001 may include an insulating material. Thus, the neutral input terminal 410, the first neutral output terminal 430, and the second neutral output terminal 450 installed on the second base structure 4001 may form an electric circuit and prevent leakage current.

The second base structure 4001 may include a heat-resistant and chemical-resistant material. Thus, the physical or chemical deformation of the second base structure 4001 due to heat generated from the neutral input terminal 410, the first neutral output terminal 430, and the second neutral output terminal 450 installed on the second base structure 4001 may be prevented.

According to an embodiment, the second base structure 4001 may include the second plate 40011, the second step 40021, and the neutral terminal mount 40031.

The second plate 40011 may have a flat plate shape extending in a left-right direction, and a portion thereof may be inserted into the cut-out portion 30022 of the control module 300.

The second step 40021 may be formed by a portion of a surface of the second plate 40011 protruding in a height direction. The second step 40021 may support at least one current sensor. For example, a first current sensor CT1 and a second current sensor CT2 may be disposed on the second step 40021.

The first current sensor CT1 and the second current sensor CT2 may each be provided as the same sensor as the above-described current sensor CT installed on the main input tab 120. However, it will be described that the current sensor CT, the first current sensor CT1, and the second current sensor CT2 are referred to differently for the purpose of distinction.

The neutral terminal mount 40031 may have a flat plate shape extending from the second plate 40011, thereby forming a space in which the neutral connection tab 420 is mounted.

The neutral connection tab 420 may be provided as a plate-shaped terminal having an area corresponding to the neutral terminal mount 40031, and the neutral input terminal 410, the first neutral output terminal 430, and the second neutral output terminal 450 may be mounted on the neutral connection tab 420.

The neutral input terminal 410 may be connected to the neutral line of the main power supply GRID so that a neutral line current may be input. The first neutral output terminal 430 may be connected to the active line of the first load Load 1, and the second neutral output terminal 450 may be connected to the active line of the second load Load 2 so that a neutral line current may be output to each load.

The neutral input terminal 410, the first neutral output terminal 430, and the second neutral output terminal 450 may be connected to each other through the neutral connection tab 420, thereby forming a circuit, through which a neutral line current flows, in the neutral module 400. Accordingly, a neutral current supplied from the main power supply GRID may be distributed to the first load Load 1 and the second load Load 2.

According to an embodiment, an edge of the neutral connection tab 420 may include a controller connection portion 420C, a transformer connection portion 420A, and a ground connection portion 420G.

The controller connection portion 420C may be connected to the control board 310 of the control module 300, and thus an input or output of a neutral line current in the neutral module 400 may be controlled. The transformer connection portion 420A may be connected to the transformer 700 so that a voltage of a neutral line current may be transformed. The ground connection portion 420G may be connected to the grounding module 800, thereby allowing a neutral line current to flow to the ground.

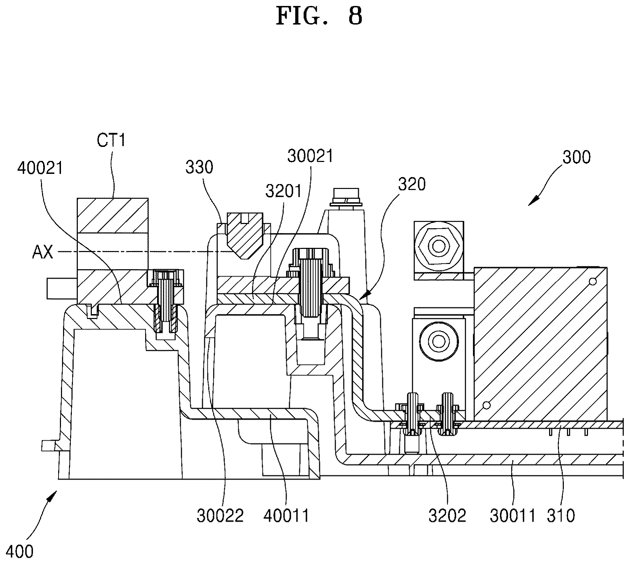

FIG. 8 is a view illustrating a cross section of adjacent portions of the control module 300 and the neutral module 400.

In some embodiments, FIG. 8 illustrates a cross section taken based on a mounting portion of the first sub-input terminal 330 and the first current sensor CT1, and the following description may be equally applied to a mounting portion of a second current sensor CT2 adjacent to the second sub-input terminal 350.

Referring to FIGS. 1 and 8, the control module 300 and the neutral module 400 may partially overlap each other to be disposed close to each other.

In some embodiments, when the second plate 40011 is inserted into the cut-out portion 30022, the second step 40021 may be disposed to face the first step 30021.

The first current sensor CT1 disposed on the second step 40021 may be disposed to face the first sub-input terminal 330 disposed on the first step 30021, and the second current sensor CT2 may be disposed to face the second sub-input terminal 350.

According to an embodiment, the first current sensor CT1 and the first sub-input terminal 330 may be installed on a straight line along a first axis AX. A conducting wire connected from the first sub-power supply E1 to the first sub-input terminal 330 may pass through the first current sensor CT1 to be connected to the first sub-input terminal 330. Power supplied from the first sub-power supply E1 may be measured by the first current sensor CT1.

When a current sensed by the first current sensor CT1 is normal, power supplied from the first sub-power supply E1 may be input to the first sub-input terminal 330. When the first current sensor CT1 detects an abnormality such as an overcurrent, a current to the first sub-input terminal 330 may be blocked.

As described above, when power is normally input to the first sub-input terminal 330, power may be transmitted to the control board 310 connected to a control board-side end portion 3202 through a terminal-side end portion 3201 of the first sub-input tab 320.

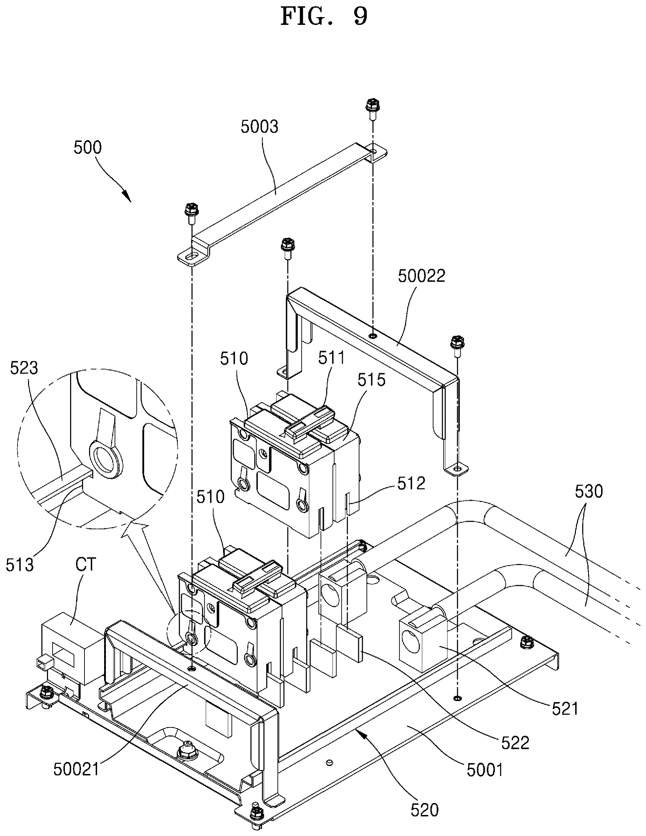

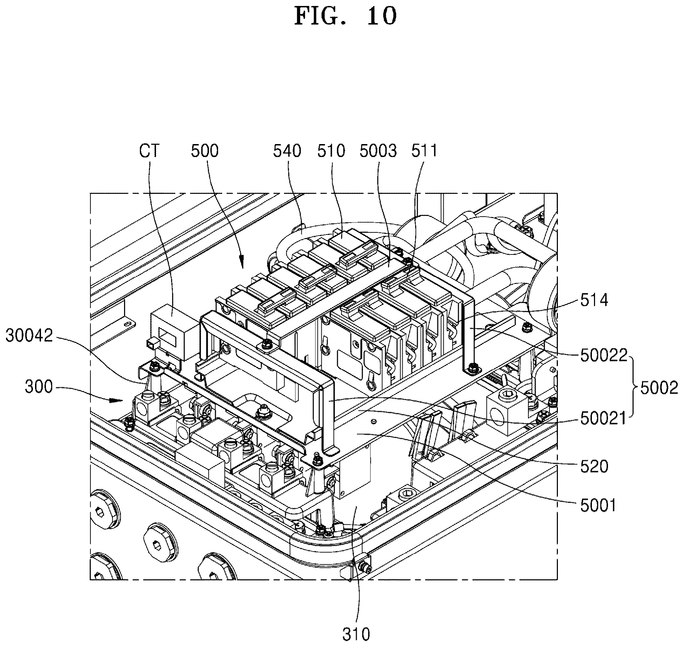

FIG. 9 is an exploded perspective view of the circuit breaker module 500 of FIG. 3. FIG. 10 is a view illustrating a state in which the circuit breaker module 500 is assembled in the grid-connected distribution box 1 of FIG. 3.

Referring to FIGS. 2, 3, 9, and 10, the circuit breaker module 500 may be installed at a certain level inside the case 10. The circuit breaker module 500 may be disposed on the first column 30041 and the second column 30042 and may overlap the control module 300.

The circuit breaker module 500 may be a structure in which a plurality of circuit breakers 510 are modularized and may have an assembly structure. Therefore, the circuit breaker module 500 and a circuit breaker assembly may be defined as the same structure.

The circuit breaker module 500 may include a first bracket 5002 adjacent to an outer surface of the circuit breaker 510 and a second bracket 5003 adjacent to an upper surface of the circuit breaker 510 on a flat base frame 5001 on which the circuit breaker 510 is disposed.

The plurality of circuit breakers 510 may be disposed in parallel in a row on the base frame 5001. The circuit breaker 510 may be provided as a circuit breaker commonly used in the electrical field. The circuit breaker 510 may detect overloads, short circuits, or the like in an electric circuit to block a current when an overcurrent occurs. The plurality of circuit breakers 510 may be provided to be respectively connected to electric circuits of different loads.

In an embodiment, the base frame 5001 may have a circuit breaker mount 520 on which the circuit breakers 510 are mounted and electrically connected thereto. The circuit breaker mount 520 may be disposed on the base frame 5001, and the circuit breaker 510 may be seated thereon.

The circuit breaker mount 520 may include a conducting wire connection terminal 521 connected to the relay module 200, a fixing pin 522 connected to the circuit breaker 510, and a fastening rail 523 to which the circuit breaker 510 is physically fastened.

In another embodiment, without the circuit breaker mount 520 on the base frame 5001, the circuit breaker 510 may be disposed on the base frame 5001, and the conducting wire connection terminal 521 and the fastening rail 523 may be disposed on the base frame 5001. In some embodiments, the fixing pin 522 may also protrude from an upper portion of the base frame 5001.

However, hereinafter, for convenience of description, a description will be provided based on an example in which the circuit breaker mount 520 is disposed on the base frame 5001.

The conducting wire connection terminal 521 may be connected to the relay module 200 and a relay-side conducting wire 530. The conducting wire connection terminal 521 may receive power input from a main power supply or a sub-power supply by the relay-side conducting wire 530.

The fixing pin 522 may have a pin shape that vertically protrudes from a base surface of the circuit breaker mount 520. A plurality of fixing pins 522 may be provided, and the plurality of circuit breakers 510 may be arranged in a row and laterally connected in parallel with each other. A connection portion 512 of the circuit breaker 510 may be inserted onto the fixing pin 522.

The fastening rail 523 may be provided as a rail extending in a longitudinal direction along a long side of the circuit breaker mount 520. The fastening rails 523 may be disposed at opposite sides of the circuit breaker mount 520 to face each other.

For example, the circuit breaker 510 may include a switch 511 that manually or automatically operate to open or close a contact point with an electric circuit of the circuit breaker 510, the connection portion 512 connected to the fixing pin 522, a hook 513 provided to be caught on the fastening rail 523, and a conducting wire connection portion 514 to which a conducting wire 540 of an electric circuit is connected.

The switch 511 may be disposed on an upper surface of the circuit breaker 510, the connection portion 512 may be disposed at one side of a lower surface of the circuit breaker 510, and the hook 513 may be disposed at the other side of the lower surface of the circuit breaker 510. The connection portion 512 may be disposed below a stepped part 515.

In the circuit breaker mount 520, when the connection portion 512 of the circuit breaker 510 is connected to the fixing pin 522, the hook 513 positioned at a side opposite to the fixing pin 522 may be fitted into and coupled to the fastening rail 523. Thus, the circuit breaker 510 may be stably coupled to the circuit breaker mount 520.

As shown in FIG. 10, the conducting wire connection portion 514 may be disposed on the other surface of the circuit breaker 510. The conducting wire connection portion 514 may be connected to a conducting wire connected to a load or a conducting wire connected to the control board 310. Accordingly, the circuit breaker 510 may open or close an electric circuit, through which power is input or output, according to a control signal generated by the control board 310.

In some embodiments, the circuit breaker 510 may be disposed adjacent to the switch 511 and may have the stepped part 515 having a step difference from the switch 511. As an example, the stepped part 515 may be disposed on the connection portion 512.

The stepped part 515 may provide a space into which the second bracket 5003 is inserted. The stepped parts 515 of the plurality of circuit breakers 510 may be disposed in a longitudinal direction, and the second bracket 5003 may be inserted between the stepped parts 515 extending in the longitudinal direction. In some embodiments, a pair of circuit breakers 510 may be disposed to face each other in a width direction, and the second bracket 5003 may be inserted between the stepped parts 515 facing each other. The second bracket 5003 may support a bottom surface or side surface of the stepped part 515 to stably fix a position of the circuit breaker 510.

The first bracket 5002 may be connected to the base frame 5001 and may be adjacent to a side surface of the circuit breaker 510. The first bracket 5002 may be provided to press and fix the circuit breakers 510 which are provided in a pair and positioned at peripheral portions among the plurality of circuit breakers 510.

As a specific example, the first bracket 5002 may include a first supporter 50021 that is joined to the base frame 5001 and is disposed at one side of the circuit breaker 510, and a second supporter 50022 that is detachably coupled to the base frame 5001, is spaced apart from the first supporter 50021, and is disposed at the other side of the circuit breaker 510. The first supporter 50021 and the second supporter 50022 may be disposed to face each other.

The plurality of circuit breakers 510 may be arranged in a row between the first supporter 50021 and the second supporter 50022. The first supporter 50021 and the second supporter 50022 may support the plurality of circuit breakers 510 in both directions.

The second bracket 5003 may be connected to the first bracket 5002 and may be adjacent to the upper surface of the circuit breaker 510. In some embodiments, the second bracket 5003 may connect the first supporter 50021 to the second supporter 50022 and may be disposed in contact with a portion of the upper surface of the circuit breaker 510. The second bracket 5003 may be provided as a bridge structure connecting the first supporter 50021 to the second supporter 50022. In this case, the second bracket 5003 may be fixed to the base frame 5001 through the first bracket 5002.

The number of the circuit breakers 510 may be variously set according to the use site or purpose of the grid-connected distribution box 1. In the grid-connected distribution box 1 according to an embodiment of the present disclosure, even if the number of the circuit breakers 510 is variously changed, the circuit breakers 510 may be stably fixed according to the changed number.

In some embodiments, the first bracket 5002 may support opposite sides of the plurality of circuit breakers 510 that are in parallel in a longitudinal direction, and the second bracket 5003 may be disposed between a pair of circuit breakers 510 that are in parallel in a width direction, thereby stably fixing the plurality of circuit breakers 510 in a height direction.

In some embodiments, each circuit breaker 510 may be stably fixed at a set position on the circuit breaker mount 520. The connection portion 512 of the circuit breaker 510 may be inserted onto the fixing pin 522, the hook 513 at a side opposite to the fixing pin 522 may be coupled to the fastening rail 523 so that each circuit breaker 510 may be stably fixed to the circuit breaker mount 520.

In the grid-connected distribution box 1 according to an embodiment of the present disclosure, the circuit breaker module 500 may overlap the control module 300 to be disposed at the upper portion of the case 10, thereby improving the space utilization inside the case 10, thereby increasing a degree of freedom in internal design, and further reducing the overall size of a distribution box.

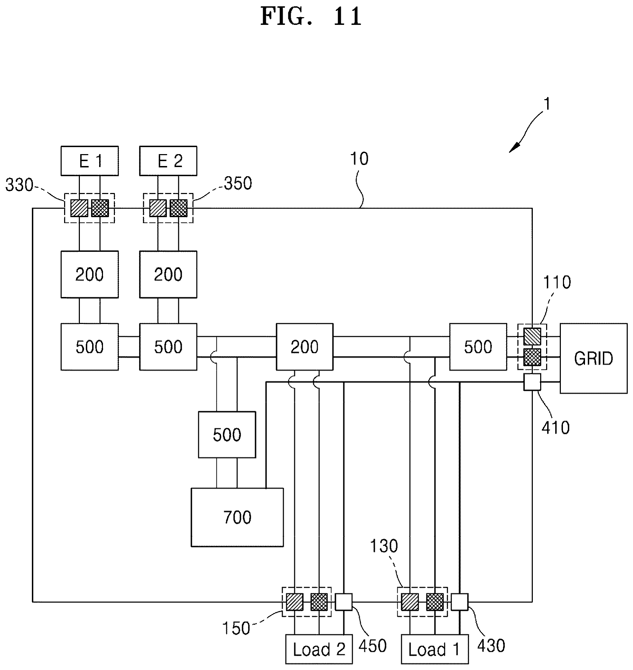

FIG. 11 is a schematic diagram illustrating a circuit of the grid-connected distribution box 1 of FIG. 2. Referring to FIGS. 1 to 11, the grid-connected distribution box 1 may be connected to a plurality of power supplies and may mutually exchange power supplied to a plurality of loads.

In the grid-connected distribution box 1 according to an embodiment of the present disclosure, a circuit for supplying main power applied from the main power supply GRID to the first load Load 1 and a circuit for supplying sub-power applied from the first sub-power supply E1 or the second sub-power supply E2 to the second load Load 2 may be provided to be separated from each other.

In this case, the grid-connected distribution box 1 may include a plurality of current sensors (not shown) to sense errors in the circuits. The control board 310 of the control module 300 may control the circuit breaker module 500 according to a result sensed by the current sensor, thereby blocking a circuit section in which a problem has occurred.

According to an embodiment, main power supplied from the main power supply GRID may be input to the grid module 100 and the neutral module 400. In some embodiments, the active line of the main power supply GRID may be connected to the main input terminal 110, and the common neutral line of the main power supply GRID may be connected to the neutral input terminal 410.

As described above with reference to FIG. 7, the neutral module 400 may independently include a circuit that supplies, to a load, power applied through the neutral line of the main power supply GRID. For example, power applied to the common neutral line of the main power supply GRID may be input to the neutral input terminal 410 and output to the first neutral output terminal 430 and may be supplied to the first load Load 1 or output to the second neutral output terminal 450 to be supplied to the second load Load 2. Therefore, the description of a neutral line circuit of the neutral module 400 will be omitted below.

The grid-connected distribution box 1 may include a power supply circuit through which main power input to the main input terminal 110 is output to the first output terminal 130. Power may be supplied to the first load Load 1 through a circuit connected from the main input terminal 110 to the first output terminal 130.

According to an embodiment, sub-power supplied from the first sub-power supply E1 and the second sub-power supply E2 may be input to the control module 300. In some embodiments, the active line of the first sub-power supply E1 may be connected to the first sub-input terminal 330, and the active line of the second sub-power supply E2 may be connected to the second sub-input terminal 350.

The grid-connected distribution box 1 may include a power supply circuit through which sub-power input to the first sub-input terminal 330 is output to the second output terminal 150 through the relay module 200. Power may be supplied to the second load Load 2 through a circuit connected from the first sub-input terminal 330 to the second output terminal 150.

The grid-connected distribution box 1 may include a power supply circuit through which sub-power input to the second sub-input terminal 350 is output to the second output terminal 150 through the relay module 200. Power may be supplied to the second load Load 2 through a circuit connected from the second sub-input terminal 350 to the second output terminal 150.

Accordingly, in the grid-connected distribution box 1, the relay module 200 may be electrically connected to at least one of the first sub-power supply E1 and the second sub-power supply E2 to supply power to the second load Load 2. Accordingly, the grid-connected distribution box 1 may stably supply power to the second load Load 2 and prevent a power outage.

According to another embodiment, the grid-connected distribution box 1 may further include a power supply circuit through which main power input to the main input terminal 110 is output to the second output terminal 150 through the relay module 200. That is, the second load Load 2 may receive power input from the main power supply GRID or may receive power input from the first sub-power supply E1 and the second sub-power supply E2.

Accordingly, when a power outage occurs due to an abnormality in power of the main power GRID that is constantly supplied, the grid-connected distribution box 1 may stably supply power to the second load Load 2 through the first sub-power supply E1 and the second sub-power supply E2 and may prevent a power outage.

The present disclosure has been described with reference to embodiments shown in the accompanying drawings, but this is merely illustrative, and those skilled in the art will understand that various modifications and other equivalent embodiments are possible therefrom. Therefore, the true scope of the present disclosure should be determined only by the appended claims.

In a grid-connected distribution box and a circuit breaker assembly according to an embodiment of the present invention, assembly and repair work may be facilitated by including a structure for arranging a circuit breaker at an upper portion of an enclosure.

In a grid-connected distribution box and a circuit breaker assembly according to an embodiment of the present disclosure, by firmly fixing a circuit breaker when moving or using a distribution box, the circuit breaker may be prevented from being separated, thereby allowing workers and users to use a distribution box safely.

In a grid-connected distribution box and a circuit breaker assembly according to an embodiment of the present disclosure, when an abnormality occurs in a specific circuit breaker, the specific circuit breaker may be easily separated and partially replaced, thereby improving convenience.

In a grid-connected distribution box and a circuit breaker assembly according to an embodiment of the present disclosure, components constituting a distribution panel may be modularized according to functions thereof, thereby reducing a manufacturing time and improving efficiency and cost competitiveness.

A grid-connected distribution box and a circuit breaker assembly according to an embodiment of the present disclosure may be connected to a plurality of power grids, and when an abnormality occurs in one grid, a power supply path may be switched to supply stable power to important loads, thereby reducing a possibility of a power outage and improving supply reliability.

## Claims

1. A grid-connected distribution box comprising:
a case having an internal space;
a grid module disposed in the internal space and having a main input terminal to which main power is input;
a control module disposed adjacent to the grid module and having a control board connected to the grid module and a sub-input terminal connected to at least one sub-power supply; and
a circuit breaker module disposed in the internal space and having a plurality of circuit breakers connected to the control board and one or more brackets which fix the plurality of circuit breakers.

2. The grid-connected distribution box of claim 1, wherein the circuit breaker module comprises:
a base frame which has a flat plate shape and on which the plurality of circuit breakers are disposed;
a first bracket connected to the base frame and having a first supporter and a second supporter which face each other; and
a second bracket which connects the first supporter to the second supporter.

3. The grid-connected distribution box of claim 2, wherein the circuit breaker module further comprises a circuit breaker mount which is disposed on the base frame and on which the plurality of circuit breakers are mounted.

4. The grid-connected distribution box of claim 2, wherein the circuit breaker module further comprises a fastening rail which extends in a longitudinal direction of the base frame and to which a hook of each of the plurality of circuit breakers is assembled.

5. The grid-connected distribution box of claim 2, wherein the circuit breaker module further comprises a fixing pin onto which a connection portion of each of the plurality of circuit breakers is inserted.

6. The grid-connected distribution box of claim 2, wherein the plurality of circuit breakers have switches and stepped parts having a step difference from the switches, and
the second bracket is inserted between the stepped parts of the plurality of circuit breakers.

7. The grid-connected distribution box of claim 6, wherein the plurality of circuit breakers each have a connection portion disposed below the stepped part and inserted onto a fixing pin.

8. The grid-connected distribution box of claim 1, wherein, in the circuit breaker module,
the plurality of the circuit breakers are disposed in a first direction which is a longitudinal direction, and
at least one of the plurality of circuit breakers is disposed in a second direction which is a width direction.

9. The grid-connected distribution box of claim 8, wherein the circuit breaker module comprises:
a first bracket having a first supporter and a second supporter which are disposed at opposite sides in the first direction and support the plurality of circuit breakers; and
a second bracket which connects the first supporter to the second supporter and supports a pair of circuit breakers adjacent in the second direction.

10. The grid-connected distribution box of claim 1, wherein the circuit breaker module is disposed on the grid module and the control module.

11. A circuit breaker assembly comprising:
a base frame;
a plurality of circuit breakers disposed on the base frame;
a first bracket connected to the base frame and having a first supporter and a second supporter facing each other; and
a second bracket which connects the first supporter to the second supporter.

12. The circuit breaker assembly of claim 11, further comprising a circuit breaker mount which is disposed on the base frame and on which the plurality of circuit breakers are mounted.

13. The circuit breaker assembly of claim 12, wherein the circuit breaker mount comprises:
a fastening rail to which a hook of each of the plurality of circuit breakers is assembled; and
a fixing pin onto which a connection portion of each of the plurality of circuit breakers is inserted.

14. The circuit breaker assembly of claim 11, wherein the plurality of circuit breakers have switches and stepped parts having a step difference from the switches, and
the second bracket is inserted between the stepped parts of the plurality of the circuit breakers.

15. The circuit breaker assembly of claim 14, wherein the plurality of circuit breakers each have a connection portion disposed below the stepped part and inserted onto a fixing pin.
